Europäisches Patentamt

European Patent Office

Office européen des brevets

(19)

(11) Veröffentlichungsnummer: **0 061 519**

**A1**

(12)

# EUROPÄISCHE PATENTANMELDUNG

(21) Anmeldenummer: **81108504.2**

(22) Anmeldetag: **19.10.81**

(51) Int. Cl.³: **G 09 B 19/12**
**G 04 B 19/06**

(30) Priorität: **11.02.81 DE 3104800**

(43) Veröffentlichungstag der Anmeldung:
**06.10.82 Patentblatt 82/40**

(84) Benannte Vertragsstaaten:
**CH DE FR GB LI NL SE**

(71) Anmelder: **VDO Adolf Schindling AG**
**Gräfstrasse 103**
**D-6000 Frankfurt/Main(DE)**

(72) Erfinder: **May, Norbert**
**Legienstrasse 1**
**D-6000 Frankfurt/Main 80(DE)**

(74) Vertreter: **Könekamp, Herbert, Dipl.-Ing.**
**Sodener Strasse 9**
**D-6231 Schwalbach(DE)**

(54) **Zeigeruhr mit auswechselbarem Zifferblatt.**

(57) Bei der erfindungsgemäßen Zeigeruhr sind auf dem Uhrgehäuse (1) von der Vorderseite her auf einen Bund (8) Scheibenringe (10, 11) aufgeschoben. Dieses Scheibenringe (10, 11) haben einen Innendurchmesser, der entsprechend des Durchmessers des Bundes (8) gestaltet ist und mindestens der doppelten Länge des großen Uhrzeigers (6) entspricht. Dadurch können die Scheibenringe (10, 11) ohne Demontage der Uhrzeiger (6, 7) auf das Uhrgehäuse (1) aufgeschoben bzw. von ihm abgenommen werden. Auf den Scheibenringen (10, 11) sind beidseitig die stundenmarkierenden Zeitsymbole angebracht. Auf diese Weise ist es möglich, bei einer Zeigeruhr mit zwei Scheibenringen (10, 11) beispielsweise durch Umsetzen der Scheibenringe (10, 11) vier verschiedene Ziffernblätter sichtbar zu machen, welche sich durch eine unterschiedliche Gestaltung der Zeitsymbole auszeichnen. Dadurch ist es möglich, jeweils diejenigen Zeitsymbole sichtbar zu machen, die für das Erkennen der Uhrzeit durch ein kleines Kind zweckmäßig sind.

Fig. 2

EP 0 061 519 A1

VDO Adolf Schindling AG        - 1 -        6ooo Frankfurt/Main 9o
                                            Gräfstr. 1o3
                                            G-S US-do
                                            Q 1912
                                            6.Februar 1981

## Zeigeruhr

Die Erfindung bezieht sich auf eine Zeigeruhr mit einem
das Uhrwerk    aufnehmenden Uhrgehäuse und einem Zeitsymbole aufweisenden, vom Gehäuse abnehmbaren Ziffernblatt. Solche Uhren sind allgemein bekannt.

Bei einer anderen bekannten Uhr, welche in der DE-OS
23 52 o21 beschrieben ist, handelt es sich um eine sogenannte Lernuhr. Bei ihr sind als Stundenmarkierung
umsetzbare Würfel mit unterschiedlichen Lernsymbolen
vorgesehen. Jeweils eine Würfelfläche trägt dabei zum
Beispiel die der Würfelposition auf der Zeigeruhr zugeordnete Ziffer, während auf den anderen Würfelflächen
mehr oder minder leicht verständliche Symbole mit demselben Aussagegehalt angeordnet sind. Auf diese Weise
kann man beispielsweise bei einem dreijährigen Kind die
am leichtesten zu erfassenden Symbole auf den Würfelflächen sichtbar nach vorne setzen und später mit zunehmendem Lernfortschritt die Würfel umsetzen, so daß
immer schwieriger zu erfassende Symbole nach vorne gelangen.

Zum Zwecke des Erlernens des Ablesens der Uhrzeit ist
die vorbekannte Zeigeruhr vorteilhaft. Als nachteilig muß jedoch festgestellt werden, daß sie gegenüber üblichen Uhren relativ teuer in der Herstellung ist, da für jede Stundenmarkierung ein anders gekennzeichneter Würfel und damit eine Vielzahl verschiedener Teile erforderlich ist. Weiterhin muß im Uhrengehäuse für jeden der zwölf Würfel eine würfelförmige, genau passende Aufnahme vorhanden sein, damit die Würfel dort einsetzbar sind. Diese Gestaltung macht die vorbekannte Zeigeruhr natürlich teuer. Hinsichtlich der Handhabung einer solchen Uhr ist es nachteilig, daß zum Umstellen der Lernsymbole alle zwölf Würfel aus den Aufnahmen herausgenommen, umgedreht und anschließend wieder eingesetzt werden müssen. Das ist relativ zeitaufwendig und wird vielfach als umbequem empfunden.

Der Erfindung liegt die Aufgabe zugrunde, eine Zeigeruhr der eingangs genannten Art zu entwickeln, welche als Lernuhr geeignet ist und hinsichtlich ihrer die Stunden markierenden Symbole umgestellt werden kann, die jedoch möglichst einfach aufgebaut ist und bei der die Umstellung der Symbole rasch und einfach vonstatten geht.

Diese Aufgabe wird erfindungsgemäß dadurch gelöst, daß das Ziffernblatt zum Aufsetzen auf das Gehäuse ohne Zeigerdemontage einen Durchlaß für die Uhrzeiger hat.

Durch diese erfindungsgemäße Gestaltung ist es zur Umstellung der Zeigeruhr auf andere Symbole nicht mehr erforderlich, für alle Stundenmarkierungen die Symbolträger einzeln auszuwechseln, vielmehr kann das Ziffernblatt als Ganzes gegen ein anderes ausgetauscht werden. Da dieses Ziffernblatt einen Durchlaß für die Uhrzeiger

hat, brauchen die Uhrzeiger beim Austausch des Ziffernblattes nicht demontiert zu werden, so daß der Ziffernblattaustausch einfach und rasch vonstatten geht. Weiterhin besteht dabei keine Gefahr einer Beschädigung der Uhr durch unsachgemäße Demontage oder Montage der Uhrzeiger. Die erfindungsgemäße Uhr ist konstruktiv überaus einfach und nicht aufwendiger als eine normale Uhr. Sie kann deshalb billig hergestellt werden. Hervorzuheben ist auch, daß auf dem austauschbaren Ziffernblatt zwangsläufig mehr Platz zur Verfügung steht als auf den Würfelflächen der vorbekannten Zeigeruhr. Dadurch können deutlichere Zahlen oder Symbole angebracht werden. Möglich ist es auch, aufgrund des größeren Platzangebotes zum Beispiel Mengensymbole und Zahlensymbole nebeneinander auf dem Ziffernblatt anzubringen. Ebenfalls kann man wie bei Ziffernblätter allgemein üblich eine durchgängige Minutenmarkierung vorsehen.

Ein weiterer Vorteil der erfindungsgemäßen Zeigeruhr besteht darin, daß diese in ihrer Konzeption nicht völlig auf den Anwendungsfall einer Lernuhr beschränkt ist. Sie erlaubt vielmehr eine weitgehende, dem Alter entsprechend angepaßte Nutzung. Es ist zum Beispiel denkbar, daß sie in der Küche, im Bad oder im Keller nach Abschluß der Lernphase Verwendung findet. Für die jeweiligen Anwendungsfälle können spezielle Ziffernblätter vorgesehen sein, die beispielsweise auch das Uhrengehäuse überragen können, so daß dieses völlig verdeckt ist und das Aussehen der Zeigeruhr ausschließlich durch das Ziffernblatt bestimmt wird.

Möglich ist es auch, das Ziffernblatt mit für Blinde ertastbaren Symbolen zu versehen.

Eine vorteilhafte Ausgestaltung der Erfindung ist im Anspruch 2 angegeben. Durch die dort gekennzeichnete Gestaltung kann das Ziffernblatt einfach von vorne auf das Uhrengehäuse geschoben werden. Bei einem kleineren Durchlaß im Ziffernblatt müßte das Ziffernblatt vorsichtig von der Seite her über die Zeiger geschoben und dann auf dem Uhrengehäuse befestigt werden.

Optisch besonders gefällig und in ihrer Handhabung praktisch ist die erfindungsgemäße Zeigeruhr, wenn sie die in Anspruch 3 angegebenen Merkmale aufweist.

Auf der Zeigeruhr lassen sich mehrere Symbolträger aufbewahren, wenn diese wie in Anspruch 4 angegeben ausgebildet ist.

Wenn gemäß einer anderen Ausgestaltung der Erfindung auf beiden Seiten der Ringscheiben verschiedene Symbole vorgesehen sind, dann kann man durch einfaches Umdrehen der Ringe die sichtbaren Symbole umstellen.

Die Zeiger der erfindungsgemäßen Zeigeruhr werden gut geschützt, wenn sie - wie in Anspruch 6 angegeben - in einer nach vornehin offenen, topfartigen Vertiefung angeordnet sind. Die Schutzwirkung kann durch einen umlaufenden Wulst - wie in Anspruch 7 gekennzeichnet - noch gefördert werden.

Um die Ringscheiben gegen selbsttätiges Herunterfallen vom Uhrengehäuse zu sichern, sind die in den Ansprüchen 8 und 9 angegebenen Maßnahmen günstig.

Das Aufhängen der erfindungsgemäßen Uhr gestaltet sich besonders einfach, wenn das Uhrengehäuse - wie in Anspruch 1o gekennzeichnet - ausgebildet ist.

Die Erfindung läßt zahlreiche Ausführungsmöglichkeiten zu. Eine davon ist in der Zeichnung dargestellt und wird nachfolgend beschrieben. Es zeigen

Figur 1    eine Draufsicht auf die erfindungsgemäß gestaltete Zeigeruhr,

Figur 2    einen Querschnitt durch die Zeigeruhr gemäß Figur 1

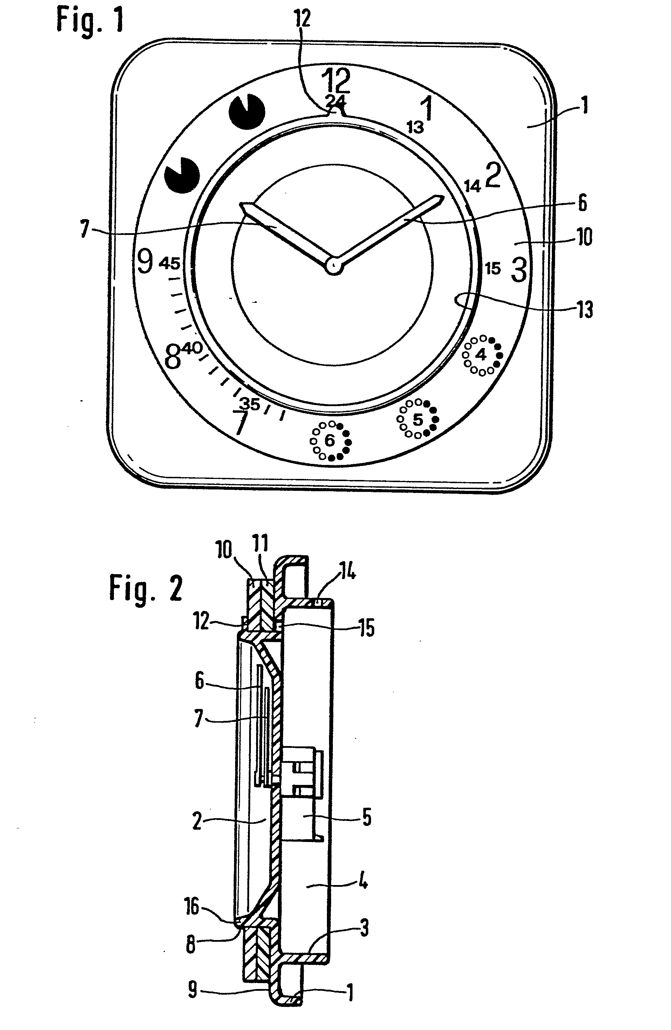

Die dargestellte Zeigeruhr hat, wie insbesondere Figur 2 zeigt, ein Uhrgehäuse 1, welches zur Vorderseite hin eine topfartige Vertiefung 2 aufweist. Zur Rückseite hin bildet das Uhrgehäuse 1 durch eine zylindrische Mantelfläche 3 einen Topf 4, in dem ein Uhrwerk 5 angeordnet ist.

In der topfartigen Vertiefung 2 sind Uhrzeiger 6 und 7 vorgesehen, wobei die Länge des großen Uhrzeigers 6 geringer ist als der Halbmesser der Vertiefung 2. Die topfartige Vertiefung 2 bildet außenseitig einen zylindrischen Bund 8. Der Übergang zwischen dem Bund 8 und der Vertiefung 2 erfolgt durch einen vorspringenden, die Vertiefung 2 einfassenden, umlaufenden Wulst 16. Es schließt sich nach außen hin eine ebene Stirnfläche 9 des Uhrengehäuses 1 an. Auf den Bund 8 sind zwei Scheibenringe 1o, 11 von der Vorderseite der Zeigeruhr her aufgeschoben, so daß sie gegen die Stirnfläche 9 des Uhrengehäuses 1 aufliegen. Eine Nase 12 verhindert, daß die Scheibenring 1o, 11 von selbst nach vorne wegrutschen und vom Bund 8 herunterfallen.

Die Scheibenringe 1o, 11 stellen Zifferblätter für die Zeigeruhr dar. Sie können jeweils beiderseits mit Zeitmarkierungen verschiedener Art bedruckt oder sonstwie versehen sein. Solche Zeitmarkierungen können zum Beispiel Ziffern, Kreise mit verschieden großen farbig hervorgehobenen Segmenten oder auch verschieden viele Punkte sein, wie das auf dem Scheibenring 1o in Figur 1 schematisch dargestellt ist. Der Scheibenring 1o kann beispielsweise auf der Vorderseite ausschließlich mit Kreisen versehen sein, welche unterschiedlich große Sektoren aufweisen, wie das oben links in Figur 1 dargestellt ist und auf der Rückseite Ziffern haben, wie das oben rechts und unten links in Figur 1 zu erkennen ist. Wenn der Lernfortschritt eines Kindes entsprechend groß ist, so ist es lediglich erforderlich, den Scheibenring 1o vom Bund 8 nach vorne hin abzuziehen, ihn herumzudrehen und mit der anderen Seite nach vorne wieder auf den Bund 8 aufzuschieben.

Bei der Gestaltung der Scheibenringe 1o, 11 ist man weitgehend frei. Ihr Außendurchmesser kann beispielsweise auch größer sein als die größte Ausdehnung des Uhrengehäuses 1, so daß sich durch die Scheibenring 1o, 11 das Aussehen der Zeigeruhr stark verändern läßt. Wichtig ist nur, daß die Scheibenring 1o, 11 stets einen Durchlaß 13 haben, dessen Durchmesser dem Durchmesser des Bundes 8 entspricht, so daß die Scheibenringe 1o, 11 auf diesem Bund aufgeschoben werden können.

Ein weiteres Detail der Erfindung ergibt sich aus der Figur 2. In der Mantelfläche 3 ist oben ein Loch 14 vorgesehen, durch das die Zeigeruhr an einen Haken aufgehangen werden kann. Um dieses Aufhängen zu erleichtern, befindet sich ein weiteres Loch 15 in der Stirnfläche 9 des Gehäuses 1. Wenn beim Aufhängen des Uhrgehäuses 1 die Ringscheiben 1o, 11 vom Bund 8 abgezogen sind, dann kann man durch dieses Loch 15 den Haken beobachten, auf den das Uhrgehäuse 1 aufgehangen werden soll, so daß es leichter ist, das Uhrgehäuse 1 mit dem Loch 14 auf diesem Haken aufzuhängen.

0061519

VDO Adolf Schindling AG          - 1 -          6ooo Frankfurt/Main 9o
                                                Gräfstr. 1o3


<u>Patentansprüche</u>

1. Zeigeruhr mit einem das Uhrwerk aufnehmenden Uhrgehäuse und einem Zeitsymbole aufweisenden, vom Gehäuse
   abnehmbaren Ziffernblatt, <u>dadurch gekennzeichnet,</u> daß
   das Ziffernblatt (Scheibenringe 1o, 11) zum Aufsetzen
   auf das Uhrgehäuse (1) ohne Zeigerdemontage einen
   Durchlaß (13) für die Uhrzeiger (6, 7) hat.

2. Zeigeruhr nach Anspruch 1, <u>dadurch gekennzeichnet,</u> daß
   der Durchlaß (13) kreisförmig ist und einen etwas
   größeren Durchmesser hat, als es der doppelten Länge
   des großen Uhrzeigers (6) entspricht.

3. Zeigeruhr nach Anspruch 1 oder einem der folgenden,
   <u>dadurch gekennzeichnet,</u> daß das Ziffernblatt ein auf
   einen Bund (8) des Uhrgehäuses (1) von der Uhrvorderseite aufschiebbaren Scheibenring (1o, 11) ist.

4. Zeigeruhr nach Anspruch 1 oder einem der folgenden,
   <u>dadurch gekennzeichnet,</u> daß der Bund (8)eine solche
   Höhe aufweist, daß mehrere Scheibenringe (1o, 11)
   gleichzeitig gehalten werden können.

5. Zeigeruhr nach Anspruch 1 oder einem der folgenden, dadurch gekennzeichnet, daß die Scheibenringe (1o, 11) beiderseitig mit verschiedenen Zeitsymbolen versehen sind.

6. Zeigeruhr nach Anspruch 1 oder einem der folgenden, dadurch gekennzeichnet, daß das Uhrgehäuse (1) eine stirnseitig offene, die Uhrzeiger (6, 7) aufnehmende, topfartige Vertiefung (2) hat.

7. Zeigeruhr nach Anspruch 1 oder einem der folgenden, dadurch gekennzeichnet, daß die Vertiefung (2) durch einen über die Höhe der aufgeschobenen Scheibenringe (1o, 11) ragenden Wulst (16) eingefaßt ist.

8. Zeigeruhr nach Anspruch 1 oder einem der folgenden, dadurch gekennzeichnet, daß der die Ringscheiben (9, 1o) haltende Bund (8) eine radial nach außen vorspringende Nase (12) hat.

9. Zeigeruhr nach Anspruch 1 oder einem der folgenden, dadurch gekennzeichnet, daß in den Ringscheiben (9, 1o) zumindest ein Loch und im von den Ringscheiben (9, 1o) abgedeckten Bereich des Uhrgehäuses ein nach vorn ragender Stift vorgesehen ist, welcher eine widerhakenartige Verdickung hat.

1o. Zeigeruhr nach Anspruch 1 oder einem der folgenden, dadurch gekennzeichnet, daß in den von den Ringscheiben (1o, 11) abdeckbaren Bereich des Uhrgehäuses (1) ein Loch (15) zur Beobachtung des Aufhänghakens beim Aufhängen der Zeigeruhr vorgesehen ist.

Fig. 1

Fig. 2

## Europäisches Patentamt

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X,Y | US-A-2 635 357 (WHITLOCK) <br><br> * Spalte 2, Zeile 21 - Spalte 3, Zeile 52; Figur 1 * | 1,2,5, 9 | G 09 B 19/12 <br> G 04 B 19/06 |
| | --- | | |
| Y | US-A-2 853 804 (BENGEYFIELD) <br> * Spalte 1, Zeilen 15-26 * | 5 | |
| | --- | | |
| A | DE-A-2 024 141 (TIMEX CORPORATION) <br> * Seite 5, Zeile 29 - Seite 6, Zeile 13; Figuren 1-3 * | 2,3 | |
| | ----- | | |

|  |
|---|
| RECHERCHIERTE SACHGEBIETE (Int. Cl. 3) |
| G 04 B <br> G 09 F <br> G 09 B |

Der vorliegende Recherchenbericht wurde für alle Patentansprüche erstellt.

| Recherchenort | Abschlußdatum der Recherche | Prüfer |
|---|---|---|
| DEN HAAG | 17-05-1982 | PINEAU A.C. |